# EUROPEAN PATENT APPLICATION

(11) **EP 2 568 375 A2**
(43) Date of publication of application: **13.03.2013**
(21) Application number: 12183467.5
(22) Date of filing: 07.09.2012
(51) Int. Cl.: G06F 3/0488

(54) **Device and method for providing shortcut in a locked screen**

(30) Priority: 09.09.2011 KR 20110091634
(71) Applicant: Pantech Co., Ltd, Mapo-gu, Seoul 121-270 (KR)
(72) Inventor: Kim, Dae Yong, 121-270 Seoul (KR); Kim, Jae Mong, 121-270 Seoul (KR)
(74) Representative: Herzog, Markus

(57) **Abstract**

A method for executing an operation on a portable terminal in a locked state includes displaying a lockscreen on the portable terminal including state information of the portable terminal; receiving an input on the lockscreen; determining whether the input corresponds to an operation of an application with respect to the displayed state information; and executing the operation according to the determination. A portable terminal includes an interface unit to output a lockscreen when the portable terminal is in a locked state and to display state information on the lockscreen; an input unit to receive an input; a verification unit to determine whether the input corresponds to an operation of an application with respect to the determined state information; and an execution unit to execute the predetermine operation.

## Description

### CROSS-REFERENCE TO RELATED APPLICATION

This application claims priority from and the benefit under 35 U.S.C. §119(a) of Korean Patent Application No. 10-2011-0091634, filed on September 9, 2011, which is hereby incorporated herein by reference for all purposes.

### BACKGROUND

### FIELD

The following description relates to a device and method for executing an application or an operation when a portable terminal is in a locked state.

### DISCUSSION OF THE BACKGROUND

Generally, a locking operation providing a lockscreen is mainly used to prevent unwanted operation of a portable terminal having a touch screen by an unintentional touch. Generally, when the portable terminal is not in use the portable terminal may operate in a locked state and display a lockscreen.

When a user attempts to use a particular operation of the portable terminal during the locked state, the user has to unlock the portable terminal from the locked state first, then search for a menu or application for the desired operation, and execute the searched menu or application. Here, since the menu or application may generally have a sub menu structure, the user may have to go through cumbersome steps of navigating through the menus and submenus until the desired operation is finally executed.

To reduce such cumbersomeness in the portable terminal having the touch screen, a shortcut a shortcut operation has been provided on the lockscreen. The shortcut operation may enable direct execution of some operations of the portable terminal.

The shortcut operation may provide some user convenience in terms of time or process by omitting one or more steps in the process of searching for a desired menu item, submenu item, or application. However, the general shortcut operation fixedly displays only a minimum number of operations that may be considered frequently used or important among various operations that may be available in the portable terminal.

More specifically, the general shortcut operation does not reflect the variety of user preferences with respect to applications. Also, the general shortcut operation does not reflect that user-required operations are dynamically changed according to one or more events dynamically occurring in the portable terminal.

### SUMMARY

Exemplary embodiments of the present invention provide a device and method for executing an application or an operation when a portable terminal is in a locked state.

Additional features of the invention will be set forth in the description which follows, and in part will be apparent from the description, or may be learned by practice of the invention.

Exemplary embodiments of the present invention provide a method for executing an operation on a portable terminal in a locked state including displaying a lockscreen on the portable terminal including state information of the portable terminal; receiving an input on the lockscreen; determining whether the input corresponds to an operation of an application with respect to the displayed state information; and executing the operation according to the determination.

Exemplary embodiments of the present invention provide a portable terminal including an interface unit to output a lockscreen when the portable terminal is in a locked state and to display state information on the lockscreen; an input unit to receive an input; a verification unit to determine whether the input corresponds to an operation of an application with respect to the determined state information; and an execution unit to execute the predetermine operation.

Exemplary embodiments of the present invention provide a portable terminal including an information collection unit to collect state information of the portable terminal; an information processing unit to determine state information to be displayed based on a policy; an interface unit to output a lockscreen when the portable terminal is in a locked state and to display the determined state information on the lockscreen; an input unit to receive an input; a verification unit to determine whether the input corresponds to an operation with respect to the determined state information; and an execution unit to execute the predetermine operation.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating a structure of a portable terminal that provides a shortcut operation in a lockscreen according to an exemplary embodiment of the present invention.

FIG. 2 is a flowchart illustrating a method for providing a shortcut operation in a portable terminal according to an exemplary embodiment of the present invention.

FIG. 3, FIG. 4, and FIG. 5 are diagrams illustrating various shortcut operations provided in a lockscreen according to exemplary embodiments of the present invention.

FIG. 6, FIG. 7, FIG. 8, and FIG. 9 are diagrams illustrating a shortcut operation executed as a lockscreen becomes unlocked according to exemplary embodiments of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. It will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ). Throughout the drawings and the detailed description, unless otherwise described, the same drawing reference numerals are understood to refer to the same elements, features, and structures. The relative size and depiction of these elements may be exaggerated for clarity.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. Although some features may be described with respect to individual exemplary embodiments, aspects need not be limited thereto such that features from one or more exemplary embodiments may be combinable with other features from one or more exemplary embodiments.

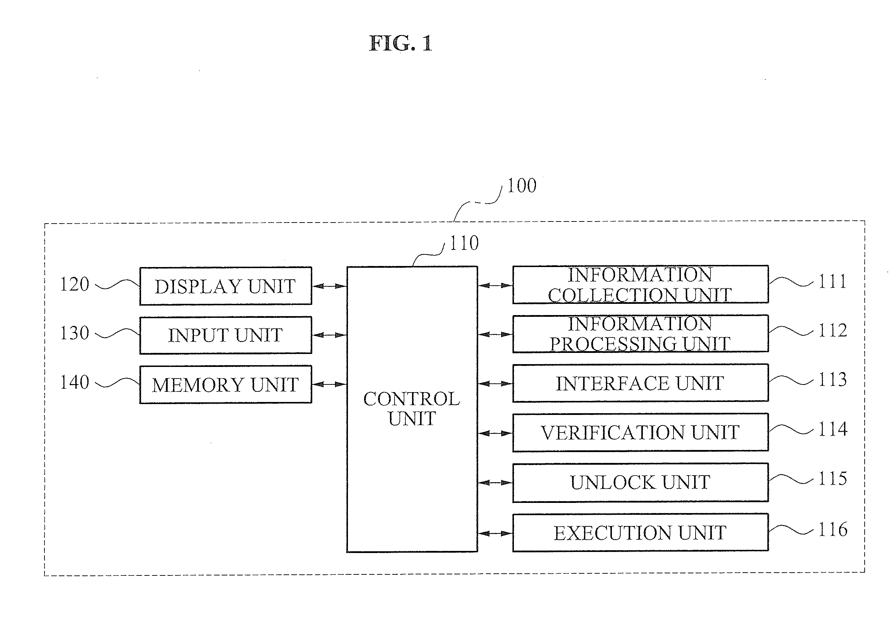

FIG. 1 is a block diagram illustrating a structure of a portable terminal 100 that provides a shortcut operation in a lockscreen according to an exemplary embodiment of the present invention.

Referring to FIG. 1, the portable terminal 100 includes a control unit 110, an information collection unit 111, an information processing unit 112, an interface unit 113, a verification unit 114, an unlock unit 115, an execution unit 116, a display unit 120, an input unit 130, and a memory unit 140.

The display unit 120 may display state information or indicator, figures and letters, moving pictures, still pictures, and the like generated during operation of the portable terminal 100. For example, the display unit 120 may output a booting screen, a standby screen, a menu screen, a video-telephony screen, a document editing screen, and the like. Further, the display unit 120 may display a lockscreen when the portable terminal 100 is in a locked state, and may also display the state information of the portable terminal 100 on the lockscreen under the control of the control unit 110. The display unit 120 may include a liquid crystal display (LCD), an organic light emitting diode (OLED) display, or the like.

The input unit 130 receives an input by a user of the portable terminal 100 and provides the input to the control unit 110. The input unit 130 may include a plurality of keys, including number keys (e.g., 0-9), a menu key, a cancel key or a delete key, a confirm key, a talk key, an end key, an Internet access key, a navigator key, and the like. The input unit 130 may include a key pad to provide the control unit 110 with key input data corresponding to a key pressed by the user. Further, the input unit 130 may include a touch sensor to detect a touch input. When the input unit 130 includes the touch sensor, the input unit 130 may receive or detect a touch or a touch input of the user and transmit a signal corresponding to the detected touch input of the user to the control unit 110. Touch input may include a touch, a double touch, a touch move, a touch drag, and a touch release.

The input unit 130 including the touch sensor and the display unit 120 may be integrated into a touch screen.

The touch screen may include the display unit 120 to perform a screen output operation and the input unit 130 to perform a touch input operation. The touch screen may be configured, such that the input unit 130 including the touch sensor is disposed on a front surface of the display unit 120. The input unit 130 may receive various touch inputs including a touch event, a double touch event, a touch move event, a touch release event, and the like. More specifically, the input unit 130 may generate a touch event in response to a touch of by object, such as a finger of the user or a stylus, and transmit the generated touch event to the control unit 110. In addition, when the finger of the user or the stylus moves in a certain direction on the input unit 130 with the touch sensor while maintaining the touched state, the touch sensor may generate the touch move event or a touch drag event and transmit the touch move event to the control unit 110. The touch move event may include, without limitation, at least a flick event of which speed of the touch move is greater than or equal to a reference threshold, and a drag event of which speed of the touch move is less than the reference threshold. Additionally, when the finger of the user terminates contact with the touch sensor after generation of the touch event or the touch move event, the touch sensor may generate the touch release event and transmit the touch release event to the control unit 110. The touch sensor may be, without limitation, a pressure reduction type, an infrared (IR) type, a capacitance type, and the like.

The memory unit 140 may store an operation system to control one or more operations, including the overall operations of the portable terminal 100, various application programs, and data for storage, such as phone numbers, short message service (SMS) messages, compressed image files, moving pictures, and the like. Also, the memory unit 140 may store a policy for determining or selecting state information to be output on the lockscreen among the state information of the portable terminal 100. The policy may include priority information of the state information to be displayed on the lockscreen, which may be based on a frequency of use, date of application acquisition, application type, size of the application, and the like. The priority may be generally used to select a part of the state information from a great quantity of state information to be displayed.

The information collection unit 111 may collect the state information of the portable terminal 100. The state information may refer to information on a physical state of the portable terminal 100 and information on a logic state for execution of an application program. For example, the information on the physical state may include a charged state of a battery, sensitivity information of a radio signal, information on an available access point (AP), and the like. The information on the logic state may include information on an application program being executed, information on an application program that has been executed previously, and the like.

Further, the state information may include at least one of system information of the portable terminal 100, list information of applications set by a user, list information of installed applications, list information of currently executed applications, history list information of previously executed applications, list information of applications accessible by a system, and information associated with one or more events generated in an application. The information associated with one or more events may include, without limitation, previously generated real-time event information, recent event information, real-time event information, and the like. Further, the event information may be generated in real-time, at reference time intervals, or according to a set schedule.

The system information of the portable terminal 100 may refer to basic state information of a system that operates the portable terminal 100. For example, the system information may include antenna sensitivity information, battery information, date information, time information, alarm information, and the like.

The list information of applications set by the user may be a list of applications selected by the user to be displayed on the lockscreen, such as, frequently used applications. The control unit 110 may execute a set event associated with one or more applications, which may be displayed on the lockscreen. When a request for execution of the set event is inputted or received from the user through the input unit 130, the control unit 110 may execute the set event. The display unit 120 may display an execution result of the set event on a screen of the portable terminal 100.

When the set event is executed, a search window to identify or search for one or more applications to be displayed on the lockscreen may be provided on the screen of the portable terminal 100. More specifically, the search window may be used to identify an application, a file, or an operation to be executed on the lockscreen. When one of the application, file, or operation is selected for execution, an icon corresponding to the selected application, file or operation may be displayed on the lockscreen.

Further, the applications may be displayed according to execution frequency of the applications or based on other criteria or condition, without limitation. When an application is searched by the user through the input unit 130 or when one or more of the applications displayed according to the execution frequency is selected, the control unit 110 may determine that the searched application or the selected application is the application to be displayed on the lockscreen. Further, the control unit 110 may automatically determine a number of applications that may be displayed. The number of applications that may be displayed may be preset or set by a user. The number of applications may be displayed on the lockscreen according to the execution frequency of the respective application.

The list information of installed applications may refer to a list of some or all applications installed or stored in the portable terminal 100. The memory unit 140 may store information associated with the applications, which may be installed or stored in the portable terminal 100. In addition, the memory unit 140 may store the list of the applications that may be installed or stored in the portable terminal 100. The information collection unit 111 may collect a list of the applications stored in the memory unit 140 under the control of the control unit 110. For example, when collection information of the portable terminal 100 is requested, the control unit 110 may request the information collection unit 111 for the list of the applications that may be installed or stored in the portable terminal 100.

The list information of currently executed applications may refer to a list of applications being currently executed in the portable terminal 100. The memory unit 140 may store information on the currently executed applications. For example, the memory unit 140 may store information associated with applications being executed by multicasting. Additionally, the memory unit 140 may store a list of the applications that may be currently executed in the portable terminal 100. The information collection unit 111 may collect the list of the currently executed applications under the control of the control unit 110. The list of the currently executed applications may be stored in the memory unit 140. For example, when collection of the state information of the portable terminal 100 is requested, the control unit 110 may request the information collection unit 111 for collection of the list of the applications that may be currently executed in the portable terminal 100.

The history list information of the executed applications may refer to a log of applications that have been executed in the portable terminal 100. The memory unit 140 may store information on the applications that have been executed in the portable terminal 100. For example, the memory unit 140 may store the log of the applications that have been executed in the portable terminal 100. The memory unit 140 may store a history of the applications that have been executed in the portable terminal 100. The information collection unit 111 may collect the history of the executed applications, which may be stored in the memory unit 140, under the control of the control unit 110. For example, when collection of the state information of the portable terminal 100 is requested, the control unit 110 may request the information collection unit 111 for the history of the applications that have been executed in the portable terminal 100.

The list information of applications accessible by a system may be an open application list. The open application may refer to applications allowing direct access of the system among applications installed by the user. The open applications may be an application coded based on an open application program interface (API). For example, with respect to an application providing real-time bus location information, an API showing a map and an API showing a bus route may be the open APIs. Here, a new application may be coded by adding an API tracking a current location of a bus, which may correspond to the open api application. More specifically, the open api application may be defined as an open api provided with an open API and modified to the new application by access of a system.

The recent event information may refer to most recently generated events among events generated in the system or various applications. However, aspects of the invention are not limited thereto, such that the recent event information may include events that were generated within a reference period of time.

The real-time event information displayed in the notification area may include various types of notification information, such as new message reception notification information, missed-call notification information, application update notification information, and the like. The notification area may refer to an area on the screen of the portable terminal 100 that may display notification information obtained by the portable terminal 100. The notification area may be or may not be shown on the screen as a default. If the notification area is not shown on the screen as a default, the notification area may be shown as a new screen or a new window within the displayed screen. The new screen or the new window may be provided from various locations or end portions of the screen, such as an upper end to a lower end, in response to an event associated with the notification or in response to a user action, such as a flicking input. The notification area may be fixed in a certain area on the screen or may be varied with respect to the state of the portable terminal 100.

The control unit 110 may check or determine the physical state information and the logic state information of the portable terminal 100, compare the state information with existing state information, and update new state information. The control unit 110 may update recognition of wireless communication and accessible access point (AP) information to the new state information. In addition, the control unit 110 may update the recognition of the wire communication to the new state information. The control unit 110 may update information related to installed applications provided from an external server by the new state information.

The updated state information may be stored in the memory unit 140. The control unit 110 may update the event information displayed in the notification area. The control unit 110 may update the event information in real time, according to a time interval, a schedule, or a condition. The updated event information may be stored in the memory unit 140. The information collection unit 111 may collect the event information stored in the memory unit 140 and updated, under the control of the control unit 110.

The event information may be displayed in the notification area using various icons associated with corresponding operations or applications according to event types. For example, the new message reception notification information may be displayed by an envelope icon, the missed-call notification information may be displayed by a phone icon, and the application update notification information may be displayed by an icon corresponding to the updated application.

The event information associated with events generated in an application may refer to events generated in applications determined by the user or the system. For example, if an email is received by a user for a G-mail® application, an icon corresponding to the G-mail® application may be displayed in a locked screen of the portable terminal 100 if the G-mail® application is an application selected by the user or system to receive event notification.

The information processing unit 112 may determine state information to be displayed among the state information collected by the information collection unit 111 according to a determined policy. The determined policy may refer to information that may be used for classifying or identifying the state information to be displayed among the collected state information. The determined policy may be set in advance during design of the portable terminal 100 or selected or adjusted by the user or the portable terminal 100 during use. The determined policy may be coded as a program or stored in a database of the memory unit 140. More specifically, the information processing unit 112 may automatically determine the state information to be displayed among the state information collected by the information collection unit 111 based on the determined policy. Further, the information processing unit 112 may transfer the state information as a query to the database and compare the state information with the determined policy stored in the database to determine the state information to be displayed.

The determined policy may include priority information of the state information to be displayed. The priority information may be used to select one or more parts or portions of the state information to be displayed when an amount of the state information to be displayed is greater than a reference threshold. For example, the priority information may be used when the state information to be displayed is greater than the information that may be displayable on the screen of the portable terminal 100. Further, the priority information may be based on, without limitation, an execution frequency of an application, a size capacity of an application, last use of the applications, a category of application, and the like.

The state information determined by the determined policy may be at least a part of the state information collected by the information collection unit 111.

The interface unit 113 may output a lockscreen, and control the display unit 120 to display the state information determined by the information processing unit 112 in a determined position or region on the lockscreen. Here, the interface unit 113 may control the determined state information to be output in a form of an icon or a message on the lockscreen.

For example, when the detected input is determined to be a selection of the determined state information, the interface unit 113 may control the display unit 120 to display additional information related to the determined state information in the determined position or region of the lockscreen.

In addition, when the determined state information is a list of applications, the interface unit 113 may control the display unit 120 to display an icon corresponding to a first application in the list in the determined position or region. Also, the interface unit 113 may control the display unit 120 to change the display icon to an icon corresponding to a next application in the list when the icon is selected by the input unit 130.

When the determined state information is message information related to the event, the interface unit 113 may control the display unit 120 such that the determined state information is displayed in the form of a message box in the determined position or region. In addition, when the message information is longer than a determined threshold or plural, the interface unit 113 may output a scroll control mechanism to allow a scrolling operation in the message box.

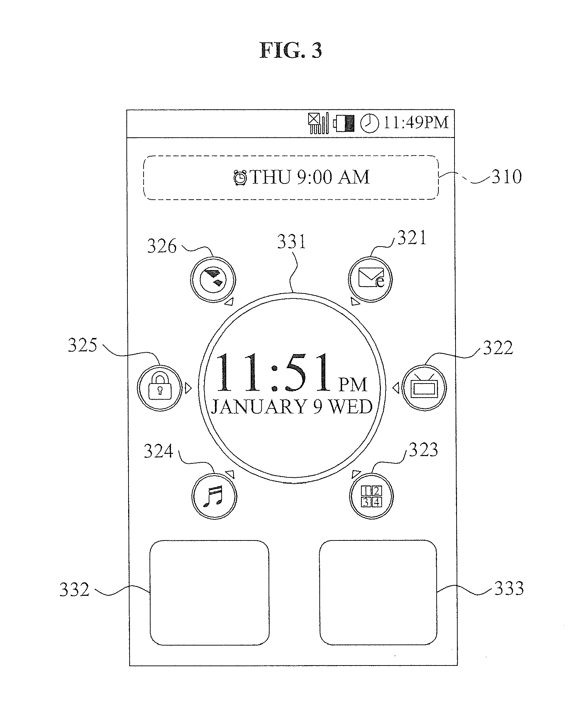

FIG. 3 is a diagram illustrating a shortcut operation provided in a lockscreen according to an exemplary embodiment of the present invention.

Referring to FIG. 3, the lockscreen includes a message box 310, a first icon box 321, a second icon box 322, a third icon box 323, a fourth icon box 324, a fifth icon box 325, a sixth icon box 326, a first action area 331, a second action area 332, and a third action area 333.

The message box 310 displays the state information. The message box 310 may display the state information in a message form. When corresponding information is determined to be longer than a reference threshold or plural, the information may be displayed through a scrolling operation, which may be executed by using a scrolling mechanism that may be provided in the message box 310. The state information displayed through the message box 310 may include, without limitation, information on recent messages, system information in a text form, and text information associated with various operations of the portable terminal 100, such as install, uninstall, and update. When the state information displayed in the message box 310 is dragged to and dropped on the first action area 331, details of the state information may be shown on an entire screen. Typically, the information outputted through the message box 310 may be event information that may be displayed in a notification area and in real-time, without limitation.

For example, when the event information is included in a text message received through a communication application, such as Kakaotalk®, the message box 310 may display at least a part of the received text message. When the received text message displayed in the message box 310 is dragged to and dropped on the first action area 331, the second action area 332, and the third action area 333, a list of message senders and text messages received and sent may be output to the screen of the portable terminal 100. Further, a screen to write a reply to the message sender or a screen to manage received text messages may be outputted.

The event information displayed in the notification area may include, without limitation, the system information, information on the currently executed applications, information on applications generating events, and the like.

The first icon box 321, the second icon box 322, the third icon box 333, the fourth icon box 334, the fifth icon box 335, and the sixth icon box 326 may display the state information in the form of an icon. For example, the first icon box 321, the second icon box 322, the third icon box 323, the fourth icon box 324, the fifth icon box 325, and the sixth icon box 326 may display an icon of an application associated with the event displayed in the notification area. When the event is plural, a plurality of icon boxes, including the first icon box 321, the second icon box 322, the third icon box 323, the fourth icon box 324, the fifth icon box 325, and the sixth icon box 326 may display icons related to the events, or a single icon box may display a list including the icons of the applications associated with the events. To display the list including the application in the icon form, a new listing icon may be generated and displayed or an icon corresponding to one of the applications included in the list, such as a sub-icon may be representatively displayed. In an example, when the listing icon including the list of applications is selected, a window including a list of applications or icons may be displayed. Further, when a sub-icon is selected, other sub-icons corresponding to applications included in the same list may be displayed.

When the icon corresponding to one of the applications is representatively displayed in the icon box, the icon may be changed to another icon included in the list by the user's touch or at a regular time period.

Besides the events displayed in the notification area, which may be in real-time, the first icon box 321, the second icon box 322, the third icon box 323, the fourth icon box 324, the fifth icon box 325, and the sixth icon box 326 may display various information in the icon form. The various information may include a list of applications that may be provided by the portable terminal 100, a list of applications set by the user, a list of currently executed applications, an application history list, a message application icon, a phone call application icon, a list of reference applications, a list of open api applications, and the like. Here, the first icon box 321, the second icon box 322, the third icon box 323, the fourth icon box 324, the fifth icon box 325, and the sixth icon box 326 may be added or deleted by the user.

When the determined state information is the list of applications, the interface unit 113 may control the determined state information to be displayed in the first icon box 321, the second icon box 322, the third icon box 323, the fourth icon box 324, the fifth icon box 325, and the sixth icon box 326 as a single icon per list. When selection of one of the first icon box 321, the second icon box 322, the third icon box 323, the fourth icon box 324, the fifth icon box 325, and the sixth icon box 326 is detected by the input unit 130, the interface unit 113 may control the applications included in the list corresponding to the selected icon box to be outputted in the following manner.

For example, when the state information corresponding to the first icon box 321 is a list of communication-related applications, the interface unit 113 may output an icon corresponding to a first application in the list in the first icon box 321. In addition, whenever the first icon box 321 is selected, the interface unit 113 may output one or more icons corresponding to other application included in the list in the first icon box 321.

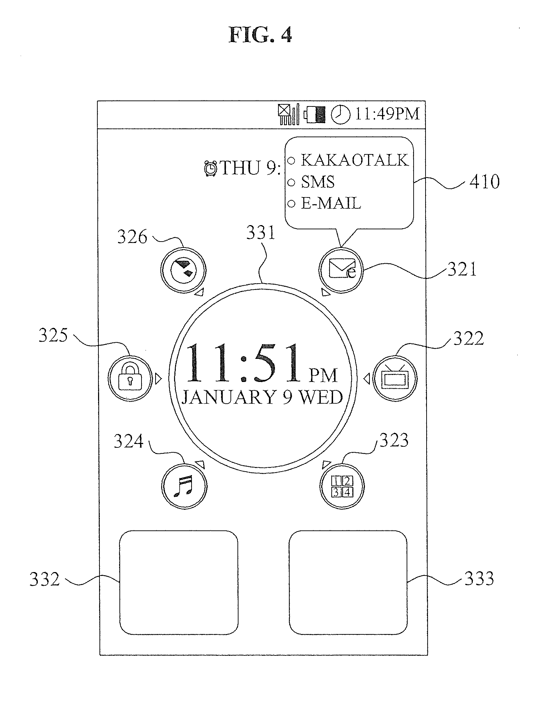

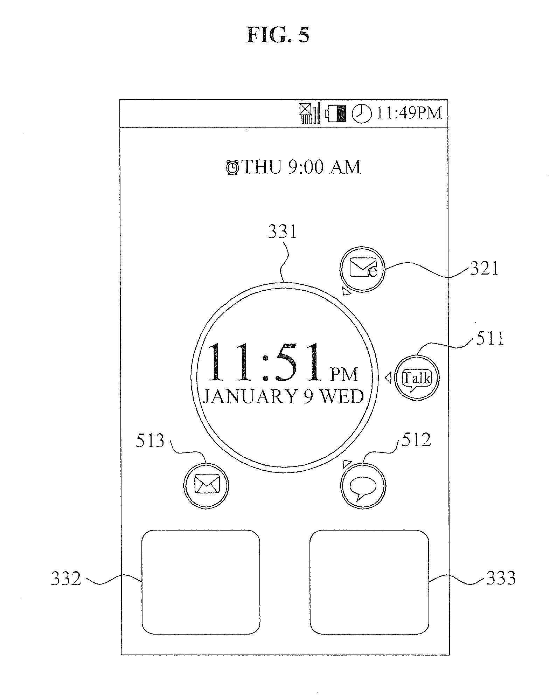

In addition, the interface unit 113 may control the display unit 120 such that applications included in the list corresponding to the icon box 321 are displayed in the form of a list as shown in FIG. 4, or in the form of another icon box in the determined position as shown in FIG. 5.

The state information of at least one of the icons that may be displayed in the message box 310 if at least one of the first icon box 321, the second icon box 322, the third icon box 323, the fourth icon box 324, the fifth icon box 325, and the sixth icon box 326 is dragged and dropped in at least one of the first action area 331, the second action area 332, and the third action area 333. Different operations may be performed according to an input detected in at least one of the first action area 331, the second action area 332, and the third action area 333. For example, when a music application is dragged to and dropped on the first action area 331, a corresponding music file or a current music file may be replayed. For example, the corresponding music file may be the music file that was being played prior to the portable terminal 100 entering the locked state. When the music application is dragged to and dropped on the second action area 332, a music file that played previous to the current music file may be played. In addition, when the music application is dragged to and dropped on the third action area 333, a music file subsequent to the current music file in a play list may be played.

Further, when a message application is dragged and dropped on the first action area 331, a list of all registered friends may be activated. When the message application is dragged and dropped on the second action area 332, chatting lists previously generated may be activated. When the message application is dragged and dropped on the third action area 333, a friend recommendation list may be activated for registration of new friends.

FIG. 4 is a diagram illustrating a shortcut operation provided in a lockscreen according to an exemplary embodiment of the present invention. More specifically, FIG. 4 illustrates a list of applications associated with one of the icons shown in FIG. 3.

Referring to FIG. 4, when the first icon box 321 is selected by touch, the interface unit 113 may output the list of applications included in the first icon box 321 adjacent to or within reference proximity of the icon box 321. The icon box 321 may be displayed in the form of a list box 410. The list box 410 may include a list of applications. For example, when the message application is output to the first icon box 321, the list box 410 may include a list of the message applications installed in the portable terminal 100. For example, a list of application programs related to Kakaotalk®, a text message service, and an e-mail service may be output through the list box 410.

FIG. 5 is a diagram illustrating a shortcut operation provided in a lockscreen according to an exemplary embodiment of the present invention. FIG. 5 is a diagram illustrating icons corresponding to the selected icon among the icons shown in FIG. 3.

Referring to FIG. 5, when the first icon box 321 is selected by a touch, the interface unit 113 may delete or hide at least one of the second icon box 322, the third icon box 323, the fourth icon box 324, the fifth icon box 325, and the sixth icon box 326 arranged around the first action area 331. Further, the interface unit 113 may arrange and output, around the first action area 331, the first icon box 321 and corresponding sub-icon boxes, which may include a first sub-icon box 511, a second sub-icon box 512, and a third sub-icon box 513, to display the icons of the applications included in the first icon box 321. Here, the first icon box 321 may be displayed larger than at least one of the first sub-icon box 511, the second sub-icon box 512, and the third sub-icon box513 to be represented as an upper-level or a main level icon box with respect to the first sub-icon box 511, the second sub-icon box 512, and the third sub-icon box 513. However, aspects of the invention are not limited thereto, such that the upper-level icon box may be the same size as the sub-icon boxes, but distinguished using a highlight, color, shading, and the like.

When the first sub-icon box 511, the second sub-icon box 512, and the third sub-icon box 513 are outputted, and when the icon box 321 is selected by a touch, the interface unit 113 may delete or hide the first sub-icon box 511, the second sub-icon box 512, and the third sub-icon box 513, and the interface unit 113 may output at least one of the icon boxes of FIG. 3, including the first icon box 321, the second icon box 322, the third icon box 323, the fourth icon box 324, the fifth icon box 325, and the sixth icon box 326 around the first action area 331.

In FIG. 4 and FIG. 5, the applications included in the first icon box 321 may be outputted in the form of the list box or icon box. However, one or more operations corresponding to an application displayed in the form of the list box or the icon box, such as operations executable in the applications corresponding to the first icon box 321, may be outputted or displayed on the locked screen. However, aspects of the invention are not limited thereto, such that an operation of an application may be displayed as a list box or an icon box, even when the application corresponding to the operation is not displayed on the lockscreen.

Examples of the additional operations will now be described.

Referring to a messenger application, the additional operations may include, without limitation, replying to a received message, displaying the received, draft, or sent message, transmitting a message using the SMS, email, or other comparable services, and the like. Referring to a phone call application, the additional operations may include, without limitation, displaying a list of calls, receiving a call, transmitting a call, displaying a phone directory, driving a specific messenger application, and the like. Referring to an alarm application, the additional operations may include a turning-off operation, restarting at reference period of time, a setting operation, and the like. With respect to a multimedia application, the additional operations may include, without limitation, executing a multimedia file, terminating a multimedia file, replaying of a multimedia file, sharing of multimedia file through a communication application or service, such as an SMS or an internet messenger, driving of a social network service (SNS) application, and the like.

The verification unit 114 may verify or determine whether the input detected by the input unit 130 is an input requesting to execute an operation with respect to the determined state information.

When the detected input is determined or verified as a selection of the determined state information and the lockscreen is released, the verification unit 114 may further determine that the detected input is an input requesting the operation to be executed with respect to the determined state information. Here, examples of the input including selection of the state information and release of the lockscreen will be described hereinafter.

For example, when the detected input is determined or verified as a selection of the determined state information and a personal identification number (PIN) or a passcode is inputted on a key pad or a similar touch input unit, the verification unit 114 may determine the detected input as the input requesting the operation with respect to the determined state information. Further, a passcode may be a reference sequence or pattern of inputs, but is not limited thereto. The PIN or passcode may be plural in number, such that the operation may be set differently according to the PIN inputted.

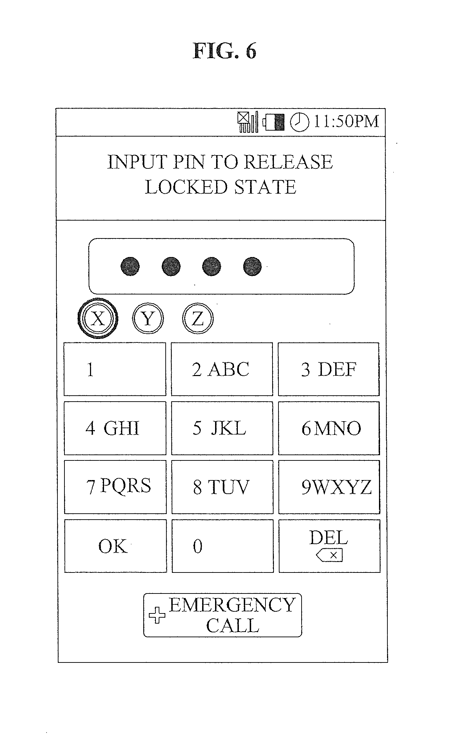

FIG. 6 is a diagram illustrating a shortcut operation executed as a lockscreen becomes unlocked according to an exemplary embodiment of the present invention.

Referring to FIG. 6, when it is detected that an icon X is touched among icon X, icon Y, and icon Z representing the determined state information and the PIN is input, the verification unit 114 may determine that the detected input as an input requesting an operation with respect to the icon X. For example, when the icon X is an event notification that notifies a user of a reception of a message, the operation may be display of the received message.

Further, when the detected input is associated with performing a reference motion, such as a dragging motion, on the determined state information, which may be displayed or represented as an icon, the verification unit 114 may determine the detected input as the input requesting the operation with respect to the determined state information, which may include releasing the lockscreen.

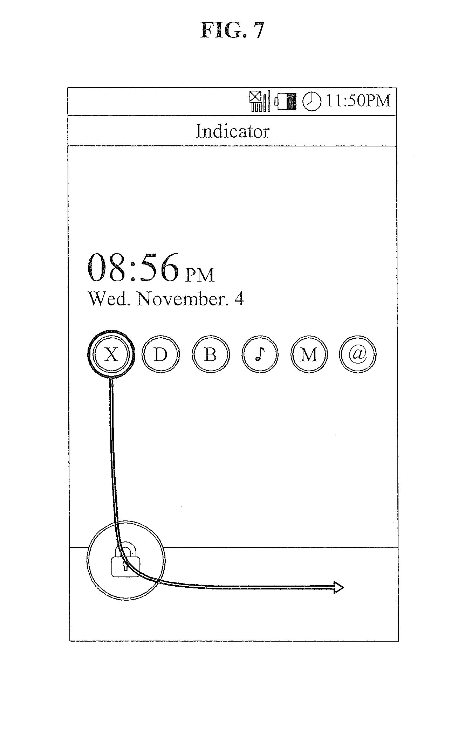

FIG. 7 is a diagram illustrating a shortcut operation executed as a lockscreen becomes unlocked according to an exemplary embodiment of the present invention.

Referring to FIG. 7, when an input for releasing the lockscreen, which may be a dragging of the icon X through a lock shaped icon, the verification unit 114 may determine that the detected input is an input requesting an operation with respect to the icon X. Further, the icon x may correspond to the determined state information. For example, when the icon X is the alarm application, the operation may be outputting of alarm information or execution of a reference application. Here, the input may be a sliding input, which may refer to dragging motion through the lock shaped icon in a reference direction, such as in the right direction as illustrated in FIG. 7. However, aspects of the invention are not limited thereto, such that any dragging motion of a selected icon through the lock shaped icon or an unlocking indicator or area may be accepted as an input requesting performance of an operation associated with the dragged icon.

Further, when the detected input is a dragging operation of an icon associated with the determined state information in a reference pattern or motion, the verification unit 114 may determine the detected input as the input requesting the operation with respect to the determined state information. The dragging of an icon in a reference pattern or motion may be performed without dragging through a specific icon, such as the lock shaped icon described above, to perform a corresponding operation. However, aspects of the invention may not be limited to a dragging motion, such that the respective input may include a sequence of separate inputs that may be detected in a reference pattern. Further, the reference pattern may be plural and the operation may be set differently according to the reference pattern.

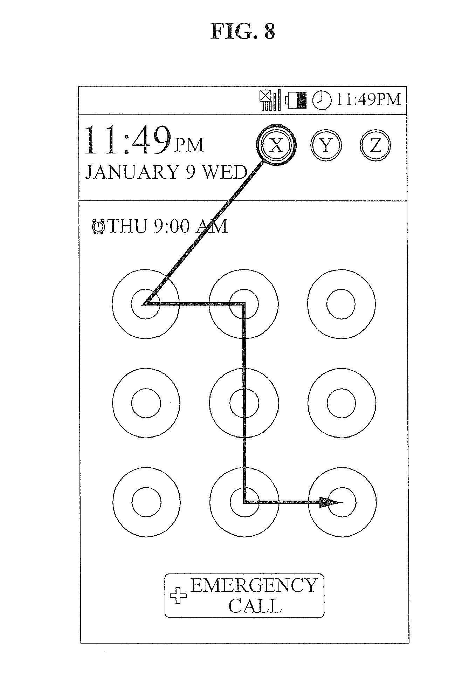

FIG. 8 is a diagram illustrating a shortcut operation executed as the lockscreen becomes unlocked according to an exemplary embodiment of the present invention.

Referring to FIG. 8, when the reference pattern is completed by dragging the icon X among the icon X, icon Y, and icon Z representing the determined state information, the verification unit 114 may determine the detected input as the input requesting an operation corresponding to the completed pattern among operations of an application corresponding to the icon X. For example, when the icon X corresponds to an application for playing a music file, and when the completed pattern has a shape of '>', the operation may play a next music file included in a play list. When the completed pattern has a shape of '<', the operation may play a previous music file included in a play list. In addition, when the icon X corresponds to a messenger application, such as Kakaotalk®, and when the completed pattern has a shape of 'V', the operation may be output or display the latest message that was received or sent. Further, when the completed pattern has a shape of 'C', the operation may be a command to call a person who received or sent the latest message.

Further, when the detected input selects or touches the determined state information, which may be dragged to and dropped on an action area, the verification unit 114 may determine the detected input as an input requesting the operation with respect to the determined state information. The action area may be plural in number, and the operation may be set differently according to the action area.

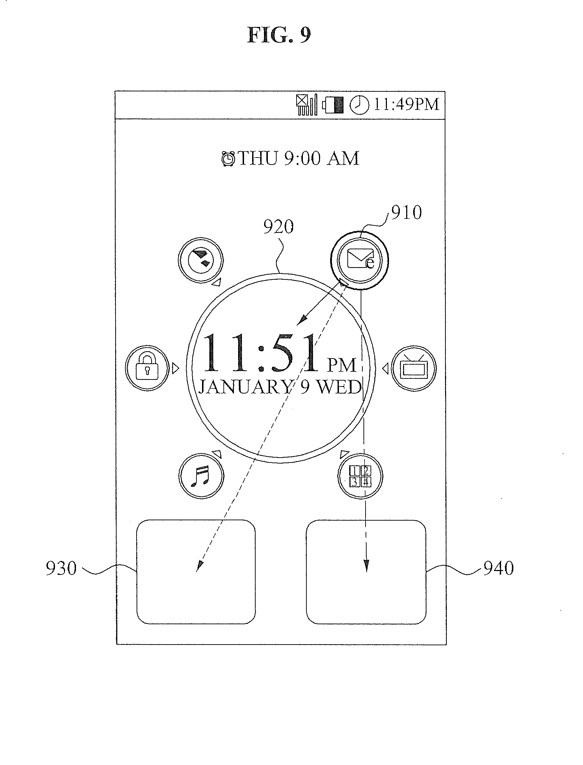

FIG. 9 is a diagram illustrating a shortcut operation executed as a lockscreen becomes unlocked according to exemplary embodiment of the present invention.

Referring to FIG. 9, when an icon 910 among icons displayed in the icon box is dragged to and dropped on a first action area 920, the verification unit 114 may determine the detected input as an input requesting an operation with respect to the icon 910. When a plurality of action areas is available, the verification unit 114 may determine that the detected input is an input requesting an operation corresponding to an action area in which the icon box is dropped in. Here, the action areas may include the first action area 920, a second action area 930, and a third action area 940.

For example, if the first icon 910 is a mailing application, an operation of reading the mail may be performed when the first icon 910 is dropped in the first action area 920, and an operation of composing the mail to send to a recipient may performed when the icon 910 is dropped in the second action area 930. Further, an operation of drafting a reply mail may be performed when the icon 910 is dropped in the third action area 940. Further, if the icon 910 is a phone call application, the operations corresponding to the first action area 920, the second action area 930, and the third action area 940 may include an operation associated with displaying a call list, transmitting a call, receiving a call, displaying a phone directory, and the like.

When additional information of the state information determined by the interface unit 113 is displayed, the verification unit 114 may additionally verify or determine whether the input detected by the input unit 130 is an input requesting an operation related to the additional information.

The unlock unit 115 may release the locked state of the portable terminal 100 when the detected input is verified or determined to be the input requesting the operation with respect to the determined state information.

The execution unit 116 may execute the operation with respect to the determined state information when the unlock unit 115 releases the locked state.

The control unit 110 may control the overall operation of the portable terminal 100. In addition, the control unit 110 may perform operations of at least one of the information collection unit 111, the information processing unit 112, the interface unit 113, the verification unit 114, the unlock unit 115, and the execution unit 116. In the drawings, the control unit 110, the information collection unit 111, the information processing unit 112, the interface unit 113, the verification unit 114, the unlock unit 115, and the execution unit 116 are separately illustrated to describe operations of the respective units. However, aspects of the invention are not limited thereto, such that one or more of the units of FIG. 1 may be combined as a single unit. Further, the control unit 110 may include at least one processor configured to perform one or more operations of at least one of the information collection unit 111, the information processing unit 112, the interface unit 113, the verification unit 114, the unlock unit 115, and the execution unit 116. Also, the control unit 110 may include at least one processor configured to perform a part of the respective operations of at least one of the information collection unit 111, the information processing unit 112, the interface unit 113, the verification unit 114, the unlock unit 115, and the execution unit 116.

Hereinafter, a method for providing a shortcut operation in a lockscreen of the above-structured portable terminal will be described.

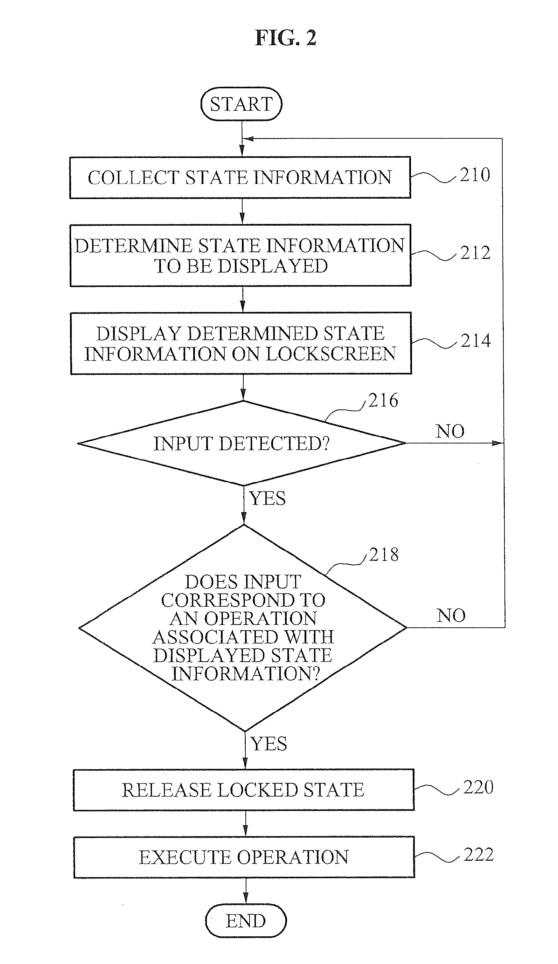

FIG. 2 is a flowchart illustrating a method for providing a shortcut operation in a portable terminal according to an exemplary embodiment of the present invention.

Referring to FIG. 2, a portable terminal collects state information of the portable terminal in operation 210.

In operation 212, the portable terminal may determine state information to be displayed among the collected state information, according to a determined policy.

In operation 214, the portable terminal may output the lockscreen and display the determined state information in a determined position of the lockscreen. In an example, the determined state information may be displayed as an icon.

In operation 216, the portable terminal may detect an input.

When an input is not detected in operation 216, the portable terminal may return to operation 210 and repeat the series of operations.

When an input is detected in operation 216, the portable terminal may verify or determine whether the detected input is an input requesting an operation with respect to the determined state information in operation 218.

When the detected input is determined or verified not to be the input requesting the operation with respect to the determined state information, the portable terminal returns to operation 210 and repeat the series of operations.

When the detected input is determined or verified to be the input requesting an operation with respect to the determined state information, the portable terminal may release the locked state of the portable terminal in operation 220.

In operation 222, when the locked state is released, the portable terminal executes the operation with respect to the determined state information.

According to exemplary embodiments of the present invention, a portable terminal may collect and output state information of the portable terminal in a lockscreen, releases a locked state when a detected input is determined to be an input requesting an operation, and executes the operation related to the determined state information. Accordingly, accessibility to an application or an operation in the lockscreen may be improved. Also, a process of converting to the locked state and executing the application may be shortened.

Exemplary embodiments of the present invention maybe recorded in a computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts.

It will be apparent to those skilled in the art that various modifications and variation can be made in the present invention without departing from the spirit or scope of the invention.

Thus, it is intended that the present invention cover the modifications and variations of this invention provided they come within the scope of the appended claims and their equivalents.

A method for executing an operation on a portable terminal in a locked state includes displaying a lockscreen on the portable terminal including state information of the portable terminal; receiving an input on the lockscreen; determining whether the input corresponds to an operation of an application with respect to the displayed state information; and executing the operation according to the determination. A portable terminal includes an interface unit to output a lockscreen when the portable terminal is in a locked state and to display state information on the lockscreen; an input unit to receive an input; a verification unit to determine whether the input corresponds to an operation of an application with respect to the determined state information; and an execution unit to execute the predetermine operation.

## Claims

1. A method for executing an operation on a portable terminal in a locked state, comprising:
displaying a lockscreen on the portable terminal comprising state information of the portable terminal;
receiving an input on the lockscreen;
determining whether the input corresponds to an operation of an application with respect to the displayed state information; and
executing the operation according to the determination.

2. The method of claim 1, wherein the state information is represented as an icon.

3. The method of claim 1 or 2, wherein the state information includes at least one of an application and an operation associated with the application.

4. The method of any of claims 1 to 3, wherein state information comprises at least one of physical state information of the portable terminal and a logic state of an application.

5. The method of any of claims 1 to 4, wherein the input corresponding to the operation comprises one of
touching an indicator corresponding to the state information and dragging the indicator to an action area of the lockscreen,
inputting a corresponding passcode in the lockscreen,
touching an indicator corresponding to the state information and dragging the indicator in a reference pattern, and
touching an indicator corresponding to the state information and dragging the indicator through an unlocking area.

6. A portable terminal, comprising:
an interface unit to output a lockscreen when the portable terminal is in a locked state and to display state information on the lockscreen;
an input unit to receive an input;
a verification unit to determine whether the input corresponds to an operation of an application with respect to the determined state information; and
an execution unit to execute the predetermined operation.

7. The portable terminal of claim 6, wherein the lockscreen comprises an action area to perform the operation when the state information is placed in the action area.

8. The portable terminal of claim 7, wherein the lockscreen further comprises a message box to display state information in a message form.

9. The portable terminal of claim 6, wherein the state information includes at least one of an application and an operation associated with the application.

10. The portable terminal of any of claims 6 to 9, wherein the state information is represented by an icon.

11. The portable terminal of claim 10, wherein a list of applications are displayed upon selection of the icon.

12. The portable terminal of claim 10 or 11, wherein a sub-icon is displayed upon selection of the icon.

13. The portable terminal of any of claims 6 to 12, wherein the input corresponding to the operation is one of
a touch input that touches and drags an indicator corresponding to the state information to an action area of the lockscreen,
an input of a passcode in the lockscreen,
a touch input that touches and drags an indicator corresponding to the state information in a reference pattern, and
a touch input that touches and drags an indicator corresponding to the state information through an unlocking area.

14. The portable terminal of any of claims 6 to 13, further comprising:
an information collection unit to collect state information of the portable terminal;
an information processing unit to determine state information to be displayed based on a policy.
